# EUROPEAN PATENT SPECIFICATION

(11) **EP 3 586 951 B1**
(45) Date of publication and mention of the grant of the patent: **12.01.2022**
(21) Application number: 19182907.6
(22) Date of filing: 27.06.2019
(51) Int. Cl.: B01F 13/10, B01F 15/00

(54) **DISPENSING APPARATUS AND METHOD FOR FORMING A MIXTURE OF MATERIALS AND USE**
ABGABEVORRICHTUNG UND VERFAHREN ZUR HERSTELLUNG EINER MISCHUNG VON MATERIALIEN UND VERWENDUNG
APPAREIL DE DISTRIBUTION ET PROCÉDÉ DE FORMATION D'UN MÉLANGE DE MATÉRIAUX ET UTILISATION

(30) Priority: 28.06.2018 FI 20185583
(43) Date of publication of application: 01.01.2020
(73) Proprietor: Jauhetekniikka Oy, 48400 Kotka (FI)
(72) Inventor: Kousa, Jukka, 48400 Kotka (FI)
(74) Representative: Papula Oy

(56) References cited:
- EP-A1- 2 433 707
- EP-A1- 2 537 794
- WO-A2-2010/015925
- DE-A1-102005 032 448
- US-A- 5 083 591
- US-A1- 2007 091 717

## Description

### FIELD OF THE INVENTION

The invention relates to a dispensing apparatus for forming a mixture of materials as defined in claim 1 as well as to a dispensing method as defined in claim 9, and to a use of the dispensing apparatus as defined in claim 10.

### BACKGROUND OF THE INVENTION

Various apparatuses are known in the prior art for dispensing different types bulk materials in various applications, such as for producing a mixture of materials e.g. in the food industry or in bakeries. The problem with prior art apparatuses is that the dispensing operations and therefore the production of material mixtures are slow, which impairs the overall capacity. In the prior art apparatuses, materials and substances are dispensed at a slow pace, and often one by one.

From US 5083591, US 2007091717, EP 253794, EP 2433707, WO 2010015925 and DE 102005032448 are known different dispensing apparatuses.

### OBJECT OF THE INVENTION

The object of the invention is to disclose a new apparatus and method for dispensing material components. Further, the object of the invention is to speed up and facilitate dispensing of material components and forming of material mixtures. In addition, the object of the invention is to form several material mixtures simultaneously.

### SUMMARY OF THE INVENTION

The dispensing apparatus, dispensing method and use of the apparatus according to the invention are characterized by the features set forth in the claims.

In the dispensing apparatus, at least one material component is dispensed at a dispensing site from a dispensing container into a receiver for forming a mixture of materials. The dispensing apparatus comprises more than one dispensing container and more than one receiver, and at least one conveyor track for moving the receiver. The receivers are arranged to move by means of the conveyor track to the dispensing sites, such as to a first dispensing container and from one dispensing container to another one, and further to a predetermined position after the last dispensing container. In addition, the dispensing apparatus comprises a control system for controlling dispensing of predetermined material components from the dispensing containers into the receiver, and for controlling dispensing of at least two receivers simultaneously. Preferably at least one material component, more preferably more than one material component is dispensed into each of the receivers from different dispensing containers. Preferably dispensing of the material components is carried out on the basis of predetermined compositions, such as on the basis of a recipe fed to the control system.

In this connection a dispensing apparatus means any dispensing device, filling device or corresponding device or their combinations, by means of which apparatus material components may be dispensed into a desired receiver for forming a mixture of materials.

In this connection a dispensed material component means any material to be dispensed that may include one or more constituents. Preferably the dispensed material component is dispensed from one dispensing container. The material component is preferably a powdery or granular raw material.

In this connection the dispensing container may be any kind of a suitable container, receptacle or the like that contains the dispensed material component and from which it may be dispensed to form a mixture of materials. The volume and shape of the dispensing container are not limited. The dispensing container may be closed, open or lidded. The dispensing container may comprise a dispensing element suited to the purpose of dispensing the material component into the receivers. The number of the dispensing containers is not limited, but it is important that they are arranged adjacent to a common conveyor track. The dispensing containers may be of the same size or alternatively their size may vary.

In this connection the receiver may be any kind or any shape of a receiver suited to the purpose. Preferably the receiver is an open or at least partly open receptacle, or at least it is provided with an opening for feeding or conveying the material components into the receiver. The receiver may be of any shape, depending on the purpose and/or structure of the dispensing apparatus. The receiver may be, for example, a box, a bucket, a tub, a bowl, a bag or the like. Preferably the receivers are identical, whereby they are for example easily stackable.

In one embodiment the dispensing apparatus comprises a frame, in connection with which the dispensing containers are arranged side by side. The frame may be of any shape, for example an elongated straight frame, a circular frame, a horseshoe-shaped frame or other suitably shaped frame. Preferably the conveyor track is arranged to follow the shape of the frame, such that the dispensing containers are located adjacent to the common conveyor track. Thus it is possible to form different-shaped dispensing apparatuses, such as an in-line dispenser or a circular dispenser.

In one embodiment the dispensing container comprises a dispensing element, for example a dispensing mouth or a hopper element or a dispensing device, such as a screw conveyor, a screw feeder, a vibrating feeder, a rotary feeder or the like, or their combination, for conveying the material component from the dispensing container into the receiver. In one embodiment in connection with the dispensing element of the dispensing container there is a dispensing valve, for example a shut-off valve that is openable and closable and preferably controllable to dispense the dispensed material component in a desired manner and at a desired speed. In one embodiment the dispensing valve is a control valve. In one embodiment the dispensing valve is arranged in connection with the dispensing device.

In connection with the dispensing container there is a measuring device for determining the amount of the dispensed material component. In one embodiment in connection with each of the dispensing containers there is a separate measuring device. The measuring device is a weighing device for weighing the material component in connection with dispensing. In connection with each of the dispensing containers there is a weighing device for weighing the material component in connection with dispensing. The weighing device is arranged to weigh the amount of the material component in real time. The weighing device may be any weighing device suitable for the purpose, e.g. an electronic weighing scale, a weighing sensor, other suitable weighing device or their combination. In one embodiment not forming part of the invention the measuring device is a volumetric measuring device. In one embodiment the measuring device is connected to the dispensing element, e.g. to the dispensing device, to achieve dispensing of a correct amount of the material component into the receiver. In one embodiment the measuring device is connected to the dispensing valve, such as to the shut-off valve or the control valve, to achieve dispensing of a correct amount of the material component into the receiver. When the measuring device is arranged in connection with the dispensing container, dispensing of the material component is precise. This gives more accurate dispensing, as measuring or weighing is not arranged in connection with the receiver.

The receivers are moved by means of the common conveyor track to the dispensing sites, i.e. to the dispensing containers. At one dispensing site a material component may be dispensed from one dispensing container or alternatively material components may be dispensed from more than one dispensing container. Preferably the dispensing containers are arranged adjacent to the conveyor track. The conveyor track used may be any suitable conveyor, for example a belt conveyor, a slat conveyor, an accumulation slat conveyor, other accumulation conveyor or other suitable conveyor or their combination. In one embodiment the dispensing apparatus comprises one conveyor track where the receivers are arranged to move to the dispensing sites, such as to the dispensing containers and from one container to another. In one embodiment the dispensing apparatus comprises more than one conveyor track, for example a primary conveyor track and an additional conveyor for transferring the receiver to a desired location after the last dispensing container.

In one embodiment the dispensing apparatus comprises at least one position detector for indicating and detecting the location of the receiver. The position detector used may be any suitable detector, for example a mechanical position limit switch, an inductive position limit detector, a capacitive limit switch, a light switch, a photodetector, other suitable detector or their combination, that preferably indicates the location of the receiver and/or the state of the dispensing site, for example whether the dispensing site is unoccupied or not. In one embodiment the dispensing apparatus comprises a position detector system for indicating and detecting the location of the receivers. In one embodiment each of the receivers are provided with an identifier that may be non-signal-transmitting, e.g. a barcode identifier or a corresponding identifier, or a signal-transmitting identifier, e.g. a RFID identifier or a corresponding identifier that is detected by the position detector included in the dispensing apparatus. Preferably the position detector or the position detector system is connected to the control system.

The dispensing apparatus comprises at least one receiver stopping device. The stopping device may be any receiver stopping device or a device for raising it from the surface of the conveyor track, that is known as such. The stopping device may be for example a stopping elevation, a stopper, other suitable stopping element or their combination. The device for raising from the surface of the conveyor track enables the use of the conveyor track during dispensing, and thereby the transfer of other receivers to unoccupied dispensing sites, even if dispensing at one or more dispensing sites is in progress. The device for raising from the surface of the conveyor track may be, for example, a cylinder or a corresponding raising device for raising the receiver from the surface of the conveyor track and holding it in place during dispensing.

The stopping device is arranged to stop the receiver at the dispensing container. In one embodiment at the end of the conveyor track there is a stopping device for stopping the receiver.

The control system is configured to control dispensing of the material components according to preset values, such as a composition or a recipe. In one embodiment the control system comprises an operating terminal, e.g. a control panel, for feeding predetermined values to the control system and/or for controlling dispensing by means of the control system. By means of the operating terminal the dispensing apparatus may be operated, used and/or controlled or information may be fed to the apparatus or updated to enable operation. In one embodiment the dispensing apparatus comprises a control system centre. Preferably the control system also controls transfer of the receivers to the unoccupied dispensing sites where the dispensing container dispenses the material component included in the composition or the recipe. Thus the receivers may be independently moved along the conveyor track.

In one embodiment the dispensed material component is arranged into the dispensing container, e.g. through its hatch, by means of a feeding device or a conveyor device or alternatively manually. The feeding device may have been selected from feeding devices known per se, such as a feeding screw, a pipe, other feeding device and their combinations.

In one embodiment the dispensing apparatus comprises a receiver feeding device for feeding the receivers to the conveyor track. The receiver feeding device may be any device known as such, for example a box dispenser, a container magazine, a feeding magazine or a corresponding device, by means of which the receivers may be automatically fed to the conveyor track. Alternatively the receivers may be arranged to the conveyor track by means of another conveyor or manually.

The dispensing apparatus is arranged to operate as a continuously operated apparatus.

The elements used in the dispensing apparatus, e.g. the dispensing containers, the receivers and the conveyor, may be any elements suited for the purpose. The elements of the dispensing apparatus may have been formed from any materials suited for the purpose.

In a method for forming a mixture of materials at least one material component is dispensed at a dispensing site from a dispensing container into a receiver. Preferably the material components are dispensed from more than one dispensing container into the receiver to form a mixture of materials, and dispensing is performed simultaneously in more than one receiver. The receivers are moved by means of a conveyor track to the dispensing sites, and further to a predetermined position after the last dispensing container, and dispensing of predetermined material components from the dispensing containers into the receivers is controlled and dispensing of at least two receivers is controlled simultaneously by means of a control system.

The dispensing apparatus according to the invention may be used in different applications in which it is necessary to form material mixtures from different material components. The apparatus according to the invention may be used in dispensing different types of materials, such as bulk materials, and in forming different material mixtures. In one embodiment the apparatus according to the invention may be used in forming material mixtures to be formed in the food industry, e.g. in the baking industry in dosing raw material mixtures for baked products or in forming dough mixtures. In one embodiment the apparatus according to the invention may be used in paint industry in the manufacture of powdery colour pigment mixtures, e.g. for solvents, in ice cream factories in the production of powder and flavour mixtures, e.g. in ice cream production processes, in juice and jam factories in the production of powdery raw material mixtures, e.g. for juice and jam cookers, in convenience food factories in the production of flavourings and other raw material mixtures, e.g. for convenience food cookers, in convenience food industry in the production of powdery raw material mixtures, e.g. in the production of a dry powdery raw material mixture needed for mustard, ketchup, mayonnaise, salad dressing or the like, in the manufacture of raw material mixtures of rubber and plastics industry, e.g. the manufacture of raw material mixtures for rotation moulding of the plastics industry, in feed industry in the production of feed mixtures, e.g. in the production of trace element and mineral substance mixtures and vitamin mixtures for feed mixers, in confectionery industry in the production of raw material mixtures, e.g. in the production of raw material mixtures of liquorice and chocolate factories for cookers, and in corresponding production processes for forming material mixtures.

By means of the invention it is possible to process and dispense various materials easily and quickly. In addition, by means of the invention it is possible to form various material mixtures efficiently and economically from different material components while minimizing the amount of waste. Due to the invention it is possible to fill more than one receiver simultaneously and also more than one receiver may be independently transferred from one location to another.

The dispensing apparatus according to the invention may be implemented cost-effectively. In the dispensing apparatus according to the invention the necessary device components are simple, and manufacture and maintenance of the apparatus is easy.

### LIST OF FIGURES

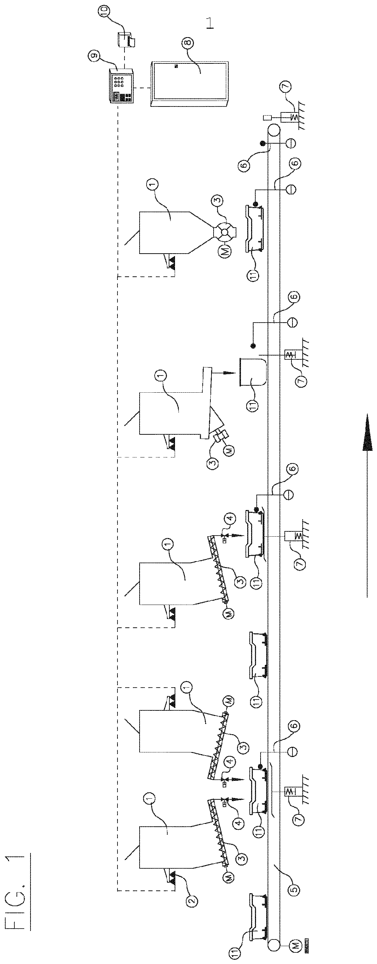

Fig. 1 illustrates one dispensing apparatus according to the invention.

### DETAILED DESCRIPTION OF THE INVENTION

The invention will be described below by way of detailed examples of its embodiments with reference to the accompanying figure.

Fig. 1 is a simplified illustration of a dispensing apparatus.

The dispensing apparatus of Fig. 1 comprises more than one dispensing container (1) and more than one receiver (11), and in this embodiment one conveyor track (5) for moving the receiver. The receivers (11) are arranged to move by means of the conveyor track (5) to a first dispensing container and from one dispensing container to another, i.e. to dispensing sites, and further to a predetermined position after the last dispensing container. In this embodiment the dispensing apparatus comprises a straight, elongated frame, in connection with which the dispensing containers are arranged side by side. In addition, the dispensing apparatus comprises a control system (8) for controlling dispensing of predetermined material components from the dispensing containers (1) into the receivers (11) and for controlling dispensing of at least two receivers simultaneously. Preferably in each receiver at least one material component is dispensed from said material component dispensing container, typically more than one material component is dispensed from different dispensing containers. At one dispensing site it is possible to perform dispensing of one or more material components into the receiver. The material components are dispensed on the basis of a predetermined recipe that has been fed to the control system.

The dispensing containers (1) of Fig. 1 comprise dispensing elements for conveying the material component from the dispensing containers into the receivers (11). Dispensing from the dispensing containers (1) takes place via a dispensing mouth and in part of the dispensing containers there is a hopper element to facilitate flow of the material component out from the container. In addition, in this embodiment the dispensing containers comprise different dispensing devices (3), such as a screw conveyor, a screw feeder, a vibrating feeder and a rotary feeder. In part of the dispensing containers (1) in connection with the dispensing elements there is a shut-off valve (4) that is openable and closable and preferably controllable to dispense the dispensed material component in a desired manner and at a desired speed. In connection with each of the dispensing containers (1) there is a weighing device (2) suited for the purpose of determining the amount of the dispensed material component by weighing in connection with dispensing. The weighing device is arranged to weigh the amount of the material component in real time, and the weighing device is connected to the dispensing element to achieve dispensing of a correct amount of the material component into the receiver.

The dispensing apparatus of Fig. 1 comprises more than one position detector (6) for indicating and detecting the location of the receivers (11). In addition, each of the receivers (11) may be provided with an identifier, e.g. a barcode identifier, a RFID identifier or a corresponding identifier that the position detector (6) included in the dispensing apparatus detects. In addition, the dispensing apparatus comprises more than one receiver stopping device (7). In this connection the stopping device used in part of the dispensing sites is a device for raising the receiver (11) from the surface of the conveyor track, such as a cylinder, and in part of the dispensing sites it is a receiver stopping device, such as a stopper. The device for raising from the surface of the conveyor track enables the use of the conveyor track during dispensing and thereby the transfer of other receivers to unoccupied dispensing sites, even if dispensing at one or more dispensing sites is in progress. In addition, at the end of the conveyor track there is a stopping device (7) for stopping the receiver.

The control system (8) of Fig. 1 is configured to control dispensing of the material components from the dispensing containers (1) according to preset values, such as a recipe, into the receivers (11). The control system comprises an operating terminal (9), e.g. a control panel, for feeding predetermined values to the control system and/or for controlling dispensing by means of the control system. Preferably the control system also controls the transfer of the receivers to the unoccupied dispensing sites where the dispensing container dispenses the material component included in the recipe. The control system (8) comprises a suitable program for carrying out controlling, for example a PLC program that controls the transfer of the receivers and simultaneous dispensing of more than one receiver on the basis on weighing based on the recipe. In addition, the control system comprises a printer (10) by means of which it is possible for example to print a report or a label indicating the content of the receiver.

In addition, the dispensing apparatus may comprise a receiver (11) feeding device for feeding the receivers to the conveyor track (5). The dispensing apparatus may also comprise a dust withdrawing device with associated pipeworks that withdraw the dust created during filling of the dispensing containers and dispensing into the receivers.

### Example 1

In this example material components were dispensed with a dispensing apparatus according to Fig. 1 to form a dough mixture.

Alternatively the apparatus according to Fig. 1 may be used for example in paint industry in the manufacture of powdery colour pigment mixtures, in ice cream factories in the production of powder and flavour mixtures, in juice and jam factories in the production of powdery raw material mixtures, in convenience food factories in the production of flavourings and other raw material mixtures, in convenience food industry in the production of powdery raw material mixtures, e.g. in the production of a dry powdery raw material mixture needed for mustard, ketchup, mayonnaise, salad dressing or the like, in the manufacture of raw material mixtures for rubber and plastics industry, in feed industry in the production of feed mixtures, e.g. in the production of trace element and mineral substance mixtures and vitamin mixtures, and in confectionery industry in the production of raw material mixtures.

It was observed that the apparatus according to the invention was very efficient and fast, and forming a mixture of materials from the material components was several orders of magnitude faster compared to apparatuses using conventional technology.

The dispensing apparatus according to the invention is suitable, as different embodiments, for use in a variety of applications for dispensing a variety of material components and/or for forming a variety of material mixtures. In addition, the dispensing apparatus according to the invention is suitable, as different embodiments, for use in a variety of industrial environments.

The invention is not limited exclusively to the above-described examples, but many modifications are possible within the scope of the inventive idea defined by the claims.

## Claims

1. A dispensing apparatus for forming a mixture of materials continuously, wherein at least one material component is dispensed at a dispensing site from a dispensing container (1) into a receiver (11) to form the mixture of materials, wherein
- the dispensing apparatus comprises more than one dispensing container (1), comprising powdery or granular material components, and more than one receiver (11), and at least one conveyor track (5) for moving the receivers,
- the material component is arranged to be dispensed from the dispensing container (1) into the receiver (11),
- each of the dispensing containers (1) comprises a weighing device (2) for weighing the material component in connection with dispensing and for achieving a correct amount of the material component in real time from the dispensing container into the receiver,
- the receivers (11) are arranged to move by means of the conveyor track (5) to the dispensing sites, and further to a predetermined position after the last dispensing container, and
- the dispensing apparatus comprises a control system (8) for controlling dispensing of predetermined powdery or granular material components from the dispensing containers (1) into the receivers (11) on the basis of a predetermined recipe, and for controlling dispensing of at least two receivers (11) simultaneously,
**characterized in that** the dispensing apparatus comprises at least one receiver stopping device (7) and the stopping device (7) is a device for raising the receiver (11) from the surface of the conveyor track during dispensing to the receiver such that it enables the use of the conveyor track (5) during dispensing, and thereby the transfer of other receivers to unoccupied dispensing sites.

2. The apparatus according to claim 1, **characterized in that** the dispensing apparatus comprises a frame, in connection with which the dispensing containers (1) are arranged side by side.

3. The apparatus according to claim 1 or 2, **characterized in that** the dispensing container (1) comprises a dispensing element (3) for conveying the material component from the dispensing container into the receiver.

4. The apparatus according to claim 3, **characterized in that** in connection with the dispensing element (3) of the dispensing container (1) there is a dispensing valve (4).

5. The apparatus according to any one of claims 1 - 4, **characterized in that** the dispensing apparatus comprises at least one position detector (6) for indicating the location of the receiver (11) .

6. The apparatus according to any one of claims 1 - 5, **characterized in that** the control system (8) is configured to control dispensing of the material components according to preset values, such as a composition or a recipe.

7. The apparatus according to any one of claims 1 - 6, **characterized in that** the control system (8) comprises an operating terminal (9).

8. The apparatus according to any one of claims 1 - 7, **characterized in that** the dispensing apparatus comprises a receiver (11) feeding device for feeding the receivers to the conveyor track (5) .

9. A method for forming a mixture of materials continuously, wherein at least one material component is dispensed at a dispensing site from a dispensing container (1) into a receiver (11) to form the mixture of materials, wherein the material components, which are powdery or granular material components, are dispensed from more than one dispensing container (1) into the receiver (11) to form the mixture of materials such that the material component is dispensed from the dispensing container (1) into the receiver (11), the material component is weighed in connection with dispensing by a weighing device (2) of the dispensing container for achieving a correct amount of the material component in real time from the dispensing container into the receiver, and dispensing is performed simultaneously into more than one receiver, and the receivers are moved by means of a conveyor track (5) to the dispensing sites, and further to a predetermined position after the last dispensing container, and dispensing of predetermined material components from the dispensing containers (1) into the receivers (11) on the basis of a predetermined recipe and simultaneous dispensing of at least two receivers (11) are controlled by means of a control system (8),
**characterized in that** the receiver (11) is raised from the surface of the conveyor track during dispensing by means of at least one receiver stopping device (7) such that it enables the use of the conveyor track (5) during dispensing, and thereby the transfer of other receivers to unoccupied dispensing sites.

10. Use of the apparatus according to any one of claims 1 - 8, **characterized in that** the apparatus is used in forming industrial material mixtures and dispensing material components in the baking industry, paint industry, ice cream factories, juice and jam factories, convenience food factories, convenience food industry, rubber and plastics industry, feed industry, confectionery industry or corresponding industry.

## Patentansprüche

1. Abgabevorrichtung zum kontinuierlichen Bilden einer Mischung von Materialien, wobei mindestens eine Materialkomponente an einem Abgabeort aus einem Abgabebehälter (1) in einen Aufnahmebehälter (11) abgegeben wird, um eine Mischung von Materialien zu bilden, wobei
- die Abgabevorrichtung mehr als einen Abgabebehälter (1) umfasst, der pulverförmige oder körnige Materialkomponenten enthält, und mehr als einen Aufnahmebehälter (11) umfasst und mindestens eine Förderstrecke (5) zum Bewegen der Aufnahmebehälter,
- die Materialkomponente dafür ausgelegt ist, aus dem Abgabebehälter (1) in den Aufnahmebehälter (11) abgegeben zu werden,
- jeder der Abgabebehälter (1) eine Wiegevorrichtung (2) zum Wiegen der Materialkomponente in Verbindung mit der Abgabe und zum Erreichen einer korrekten Menge der Materialkomponente in Echtzeit aus dem Abgabebehälter in den Aufnahmebehälter umfasst,
- die Aufnahmebehälter (11) so angeordnet sind, dass sie mittels der Förderstrecke (5) zu den Abgabeorten und ferner zu einer vorgegebenen Position hinter dem letzten Abgabebehälter bewegt werden, und
- die Abgabevorrichtung ein Steuerungssystem (8) zum Steuern der Abgabe von vorgegebenen pulverförmigen oder körnigen Materialkomponenten aus den Abgabebehältern (1) in die Aufnahmebehälter (11) auf der Basis einer vorgegebenen Rezeptur und zum Steuern der Abgabe von mindestens zwei Aufnahmebehältern (11) gleichzeitig umfasst, **dadurch gekennzeichnet, dass** der Abgabebehälter mindestens eine Aufnahmebehälter-Stoppvorrichtung (7) umfasst, und die Stoppvorrichtung (7) ist eine Vorrichtung zum Anheben des Aufnahmebehälters (11) von der Oberfläche der Förderstrecke während der Abgabe an den Aufnahmebehälter, sodass die Verwendung der Förderstrecke (5) während der Abgabe und daher der Transport anderer Aufnahmebehälter zu nicht belegten Abgabeorten ermöglicht wird.

2. Vorrichtung nach Anspruch 1, **dadurch gekennzeichnet, dass** die Abgabevorrichtung einen Rahmen enthält, an dem die Abgabebehälter (1) nebeneinander angeordnet sind.

3. Vorrichtung nach Anspruch 1 oder 2, **dadurch gekennzeichnet, dass** der Abgabebehälter (1) ein Abgabeelement (3) zum Transportieren der Materialkomponente vom Abgabebehälter in den Aufnahmebehälter umfasst.

4. Vorrichtung nach Anspruch 3, **dadurch gekennzeichnet, dass** es in Verbindung mit dem Abgabeelement (3) des Abgabebehälters (1) ein Abgabeventil (4) gibt.

5. Vorrichtung nach einem der Ansprüche 1 - 4, **dadurch gekennzeichnet, dass** die Abgabevorrichtung mindestens einen Positionsdetektor (6) zum Anzeigen der Position des Aufnahmebehälters (11) umfasst.

6. Vorrichtung nach einem der Ansprüche 1 - 5, **dadurch gekennzeichnet, dass** das Steuerungssystem (8) dafür ausgelegt ist, die Abgabe der Materialkomponenten entsprechend den voreingestellten Werten, wie z.B. eine Zusammensetzung oder eine Rezeptur, zu steuern.

7. Vorrichtung nach einem der Ansprüche 1 - 6, **dadurch gekennzeichnet**, das Steuerungssystem (8) ein Bedienungsterminal (9) enthält.

8. Vorrichtung nach einem der Ansprüche 1 - 7, **dadurch gekennzeichnet, dass** die Abgabevorrichtung mindestens eine Zuführvorrichtung für einen Aufnahmebehälter (11) zum Transportieren der Aufnahmebehälter zur Förderstrecke (5) umfasst.

9. Verfahren zum kontinuierlichen Bilden einer Mischung von Materialien, wobei mindestens eine Materialkomponente an einem Abgabeort aus einem Abgabebehälter (1) in einen Aufnahmebehälter (11) abgegeben wird, um eine Mischung von Materialien zu bilden, wobei die Materialkomponenten, die pulverförmige oder körnige Materialkomponenten sind, von mehr als einem Abgabebehälter (1) in den Aufnahmebehälter (11) abgegeben werden, um die Mischung von Materialien zu bilden, derart dass die Materialkomponente aus dem Abgabebehälter (1) in den Aufnahmebehälter (11) abgegeben wird, die Materialkomponente wird in Verbindung mit der Abgabe durch eine Wiegevorrichtung (2) des Abgabebehälters gewogen, um eine korrekte Menge der Materialkomponente in Echtzeit aus dem Abgabebehälter in den Aufnahmebehälter zu erhalten, und die Abgabe erfolgt gleichzeitig in mehr als einen Aufnahmebehälter, und die Aufnahmebehälter werden mittels der Förderstrecke (5) zu den Abgabeorten transportiert, und ferner zu einer vorgegebenen Position nach dem letzten Abgabebehälter, und das Abgeben von vorgegebenen Materialkomponenten aus den Abgabebehältern (1) in die Aufnahmebehälter (11) auf der Basis einer vorgegebenen Rezeptur und die gleichzeitige Abgabe von mindestens zwei Aufnahmebehältern (11) werden mittels eines Steuerungssystems (8) gesteuert,
**dadurch gekennzeichnet, dass** der Aufnahmebehälter (11) von der Oberfläche der Förderstrecke während der Abgabe mittels mindestens einer Aufnahmebehälter-Stoppvorrichtung (7) abgehoben wird, derart dass sie die Nutzung der Förderstrecke (5) während der Abgabe ermöglicht und damit den Transport anderer Aufnahmebehälter zu nicht besetzten Abgabeorten.

10. Verwendung der Vorrichtung gemäß den Ansprüchen 1 - 8, **dadurch gekennzeichnet, dass** die Vorrichtung bei der Bildung von industriellen Materialmischungen und der Abgabe von Materialkomponenten in der Backwarenindustrie, Farbenindustrie, Speiseeisfabriken, Saft- und Marmeladenfabriken, Fertiggerichtefabriken, Fertignahrungsmittelindustrie, Gummi- und Kunststoffindustrie, Futtermittelindustrie, Süßwarenindustrie oder entsprechenden Industriezweigen verwendet wird.

## Revendications

1. Appareil de distribution pour former un mélange de matériaux en continu, dans lequel au moins un composant de matériau est distribué au niveau d'un site de distribution à partir d'un récipient de distribution (1) dans un récepteur (11) pour former le mélange de matériaux, dans lequel
- l'appareil de distribution comprend plus d'un récipient de distribution (1), comprenant des composants de matériau pulvérulent ou granulaire, et plus d'un récepteur (11), et au moins une piste de transport (5) pour déplacer les récepteurs,
- le composant de matériau est agencé pour être distribué à partir du récipient de distribution (1) dans le récepteur (11),
- chacun des récipients de distribution (1) comprend un dispositif de pesage (2) pour peser le composant de matériau en liaison avec la distribution et pour obtenir une quantité correcte du composant de matériau en temps réel à partir du récipient de distribution dans le récepteur,
- les récepteurs (11) sont agencés pour se déplacer au moyen de la piste de transport (5) vers les sites de distribution, et plus loin jusqu'à une position prédéterminée après le dernier récipient de distribution, et
- l'appareil de distribution comprend un système de commande (8) pour commander la distribution de composants de matériau pulvérulent ou granulaire prédéterminés à partir des récipients de distribution (1) dans les récepteurs (11) sur la base d'une recette prédéterminée, et pour commander la distribution d'au moins deux récepteurs (11) simultanément,
**caractérisé en ce que** l'appareil de distribution comprend au moins un dispositif d'arrêt de récepteur (7) et le dispositif d'arrêt (7) est un dispositif permettant de soulever le récepteur (11) par rapport à la surface de la piste de transport pendant la distribution au récepteur de sorte qu'il permette l'utilisation de la piste de transport (5) pendant la distribution, et ainsi le transfert d'autres récepteurs vers des sites de distribution inoccupés.

2. Appareil selon la revendication 1, **caractérisé en ce que** l'appareil de distribution comprend un cadre, en liaison avec lequel les récipients de distribution (1) sont agencés côte à côte.

3. Appareil selon la revendication 1 ou 2, **caractérisé en ce que** le récipient de distribution (1) comprend un élément de distribution (3) pour transporter le composant de matériau depuis le récipient de distribution dans le récepteur.

4. Appareil selon la revendication 3, **caractérisé en ce qu'**il existe une soupape de distribution (4) en liaison avec l'élément de distribution (3) du récipient de distribution (1).

5. Appareil selon l'une quelconque des revendications 1 à 4, **caractérisé en ce que** l'appareil de distribution comprend au moins un détecteur de position (6) pour indiquer l'emplacement du récepteur (11).

6. Appareil selon l'une quelconque des revendications 1 à 5, **caractérisé en ce que** le système de commande (8) est configuré pour commander la distribution des composants de matériau selon des valeurs prédéfinies, telles qu'une composition ou une recette.

7. Appareil selon l'une quelconque des revendications 1 à 6, **caractérisé en ce que** le système de commande (8) comprend un terminal de commande (9).

8. Appareil selon l'une quelconque des revendications 1 à 7, **caractérisé en ce que** l'appareil de distribution comprend un dispositif d'acheminement (11) de récepteurs pour acheminer les récepteurs vers la piste de transport (5).

9. Procédé pour former un mélange de matériaux en continu, dans lequel au moins un composant de matériau est distribué au niveau d'un site de distribution à partir d'un récipient de distribution (1) dans un récepteur (11) pour former le mélange de matériaux, dans lequel les composants de matériau, qui sont des composants de matériau pulvérulent ou granulaire, sont distribués à partir de plus d'un récipient de distribution (1) dans le récepteur (11) pour former le mélange de matériaux de sorte que le composant de matériau soit distribué à partir du récipient de distribution (1) dans le récepteur (11), le composant de matériau est pesé en liaison avec la distribution par un dispositif de pesage (2) du récipient de distribution pour obtenir une quantité correcte du composant de matériau en temps réel à partir du récipient de distribution dans le récepteur, et la distribution est effectuée simultanément dans plus d'un récepteur, et les récepteurs sont déplacés au moyen d'une piste de transport (5) vers les sites de distribution, et plus loin jusqu'a une position prédéterminée après le dernier récipient de distribution, et la distribution de composants de matériau prédéterminés à partir des récipients de distribution (1) dans les récepteurs (11) sur la base d'une recette prédéterminée et la distribution simultanée d'au moins deux récepteurs (11) sont commandées au moyen d'un système de commande (8),
**caractérisé en ce que** le récepteur (11) est soulevé par rapport à la surface de la piste de transport pendant la distribution au moyen d'au moins un dispositif d'arrêt de récepteur (7) de sorte qu'il permette l'utilisation de la piste de transport (5) pendant la distribution, et ainsi le transfert d'autres récepteurs vers des sites de distribution inoccupés.

10. Utilisation de l'appareil selon l'une quelconque des revendications 1 à 8, **caractérisée en ce que** l'appareil est utilisé pour former des mélanges de matériaux industriels et distribuer des composants de matériau dans l'industrie de la boulangerie, l'industrie de peinture, des usines de crème glacée, des usines de jus et de confiture, des usines d'aliments prêts-à-servir, l'industrie d'aliments prêts-à-servir, l'industrie du caoutchouc et du plastique, l'industrie alimentaire, l'industrie de la confiserie ou une industrie correspondante.
